# EUROPÄISCHE PATENTSCHRIFT

(11) **EP 1 752 326 B1**
(45) Veröffentlichungstag und Bekanntmachung des Hinweises auf die Patenterteilung: **15.09.2010**
(21) Anmeldenummer: 06009751.6
(22) Anmeldetag: 11.05.2006
(51) Int. Cl.: B60J 7/04

(54) **Bewegbare Dachanordnung für ein Cabriolet**
Movable roof for cabriolet
Toit mobile pour cabriolet

(30) Priorität: 12.08.2005 DE 102005038203
(43) Veröffentlichungstag der Anmeldung: 14.02.2007
(73) Patentinhaber: Dr. Ing. h.c. F. Porsche AG, 70435 Stuttgart (DE)
(72) Erfinder: Froeschle, Mathias, 73760 Ostfildern (DE)

(56) Entgegenhaltungen:
- DE-A1- 10 065 324
- DE-A1- 10 205 935
- DE-A1- 10 242 501
- US-A1- 2002 003 355

## Beschreibung

Bei der Erfindung wird ausgegangen von einer Dachanordnung für ein Cabriolet, gemäß Oberbegriff des Anspruchs 1.

Aus der DE 102 05 935 A1 ist eine gattungsbildende Dachanordnung für ein Cabriolet bekannt. Diese Dachanordnung kann wahlweise in eine Schließstellung gebracht werden, in der sie einen Fahrzeuginnenraum überspannt, oder in eine zusammengelegte Offenstellung in einen heckseitigen Ablagekasten bewegt werden. Um die Dachanordnung bewegen zu können, weist diese beidseitig jeweils ein seitliches Steuerlenkergestänge auf, welches üblicherweise an karosseriefesten Verdecklagern angelenkt und dort mit einem Antrieb verbunden ist. Außerdem besitzt die Dachanordnung in einem vorderen Dachabschnitt ein erstes Querteil, das die beiden Steuerlenkergestänge verbindet und das bei der bekannten Dachanordnung von einer starren Dachplatte gebildet wird, die gelenkig mit dem Steuerlenkergestänge verbunden ist. Die Dachanordnung besitzt weiterhin ein gesteuertes zweites Querteil, das hier als starre Heckscheibe mit einem Rahmen ausgeführt ist. Die Steuerung der Bewegung des zweiten Querteils erfolgt hier über Halterungen, die einerseits mit dem Querteil und andererseits mit dem Steuerlenkergestänge verbunden sind. Die Heckscheibe bildet einen hinteren Dachabschnitt der Dachanordnung. Dem vorderen Dachabschnitt der Dachanordnung ist ferner zumindest ein starres Dachsegment zugeordnet, welches den Bezug, der auch als Verdeckstoff bezeichnet wird, unterstützt. Bei der bekannten Dachanordnung ist das erste starre Dachsegment gemäß Fig. 7 über starre Halter fest mit dem Steuerlenkergestänge verbunden, so dass beim Bewegen der Dachanordnung das starre Dachsegment zwangsweise durch das Steuerlenkergestänge mitgenommen wird. Als nachteilig erscheint bei dieser Dachanordnung insbesondere die Packhöhe in der zusammengelegten Offenstellung im Ablagekasten.

Aufgabe der Erfindung ist es, eine Dachanordnung der eingangs genannten Art für ein Cabriolet anzugeben, welches den genannten Nachteil nicht aufweist.

Gelöst wird diese Aufgabe mit einer Dachanordnung, die die in Anspruch 1 genannten Merkmale aufweist. Die Erfindung ausgestaltende Merkmale sind in den Unteransprüchen angegeben.

Die mit der Erfindung hauptsächlich erzielten Vorteile werden insbesondere dadurch erreicht, dass das starre Dachsegment aus der Steuerung der Steuerlenkergestänge herausgelöst ist, wodurch Halterungen bzw. Hebel oder Gestänge für die Bewegungssteuerung des starren Dachsegments nicht erforderlich sind. Die Bewegung des starren Dachsegments beim Überführen der Dachanordnung von der Schließstellung in die Ablagestellung und umgekehrt wird hauptsächlich dadurch erreicht, dass das Dachsegment mit dem Bezug verbunden ist. Diese Verbindung kann flächig, vollflächig, streifenförmig durch Bänder oder Gurte ggf. Spanngurte, umlaufend, im Randbereich des Dachsegments punktförmig oder durch Einstecken in den Bezug erfolgen. Der Bezug kann dabei ein - oder mehrlagig, beispielsweise mit einer Außenhaut, einem Innenhimmel, zumindest einer Dämm - und/oder Vlieslage, zumindest einer textilen Lage usw., ausgeführt sein, wobei das starre Dachsegment ggf. zwischen zwei Lagen des Bezugs liegen kann. Das starre Dachsegment wird in der Schließstellung der Dachanordnung dadurch abgestützt, dass es auf dem zumindest einen Querteil aufliegt. In Lage gehalten wird das Dachsegment außerdem durch die Spannung des Bezugs, wenn die Dachanordnung in Schließstellung verlagert ist. Dadurch, dass das erste Querteil und/oder das zweite Querteil kinematisch gesteuert sind/ist, legt sich das starre erste Dachsegment automatisch mit der Bewegung des Bezugs in die Offenstellung ab. Die so gesteuerte Bewegung des starren Dachsegments kann daher auch als Stoffsteuerung bezeichnet werden.

Um ein enges Zusammenklappen des Steuerlenkergestänges zu ermöglichen, wird in einer Weiterbildung nach Anspruch 2 vorgeschlagen, das erste Dachsegment verbindungslos auf zumindest einem der Querteile aufzulegen. Denkbar wäre es jedoch auch, in Schließstellung der Dachanordnung das starre Dachsegment mit zumindest einem der Querteile formschlüssig zu verriegeln.

In einem ersten Ausführungsbeispiel (Anspruch 3) ist das starre Dachsegment als vollflächige Platte ausgeführt. In einem anderen Ausführungsbeispiel (Anspruch 4) ist das starre Dachsegment als umlaufender Rahmen ausgestaltet.

Um das starre Dachsegment flächig mit dem Bezug verbinden zu können, sind in den Ansprüchen 5 bis 8 verschiedene Ausführungsbeispiele angegeben. Das erfindungsgemäß an dem Verdeckbezug angebundene Dachsegment kann für verschiedenste Arten von Dachanordnungen bzw. Verdecken eingesetzt werden, wie dies in den Ausführungsvarianten entsprechend den Ansprüchen 9 bis 12 angegeben ist. Bei einem Bezug mit mehreren Lagen kann die in Anspruch 5 angegebene Tasche von zwei der Lagen gebildet sein.

Um die Ablagehöhe bzw. Packhöhe der im Ablagekasten abgelegten Dachanordnung weiter zu verringern, kann gemäß Anspruch 13 das starre Dachsegment längs- oder quergeteilt sein.

Um das gesteuerte zweite Querteil, insbesondere bei Ausführung als ein das Heckfenster aufweisender Dachabschnitt, bereitstellen zu können, wird dieser Dachabschnitt direkt oder indirekt in die Steuerung durch das Steuerlenkergestänge eingebunden. Denkbar wäre es jedoch auch, dass das zweite gesteuerte Querteil bzw. der hintere Dachabschnitt über einen separaten Antrieb bzw. eine Steuerung verfügt.

Für eine günstige Einleitung der Ablagebewegung des Dachsegments, kann es durch zumindest ein Steuerlenkergestänge angesteuert werden. Dafür kann beispielsweise eine Verbindung in einer Schwenkachse mit dem Steuerlenkergestänge vorgesehen sein. Eine dauerhafte Zwangsführung des Dachsegments über die gesamte Ablagebewegung von der Schließstellung in die Offenstellung wird damit aber nicht erreicht. Diese Schwenkachse kann durch einen Drehpunkt zwischen Steuerlenkergestänge und Dachsegment oder auch durch einen Lenker zwischen diesen beiden Elementen gebildet sein. Alternativ oder zusätzlich wäre es möglich, an zumindest einem der Steuerlenkergestänge einen in Richtung des starren ersten Dachsegments weisenden Fortsatz anzubringen, der das starre Dachsegments bei der Ablagebewegung ansteuern bzw. anstoßen und auf dem das Dachsegment in ggf. Schließstellung der Dachanordnung aufliegen kann.

Nachfolgend wird die Erfindung mit Bezug auf die Zeichnung anhand von Ausführungsbeispielen näher erläutert. Es zeigen:
- Fig. 1: in einem Längsschnitt ein erstes Ausführungsbeispiel einer Dachanordnung,
- Fig. 2: in einem Längsschnitt ein zweites Ausführungsbeispiel einer Dachanordnung,
- Fig. 3: eine perspektivische Ansicht einer Dachanordnung und
- Fig. 4, 5 und 6: in Seitenansicht jeweils ein weiteres Ausführungsbeispiel einer Dachanordnung.

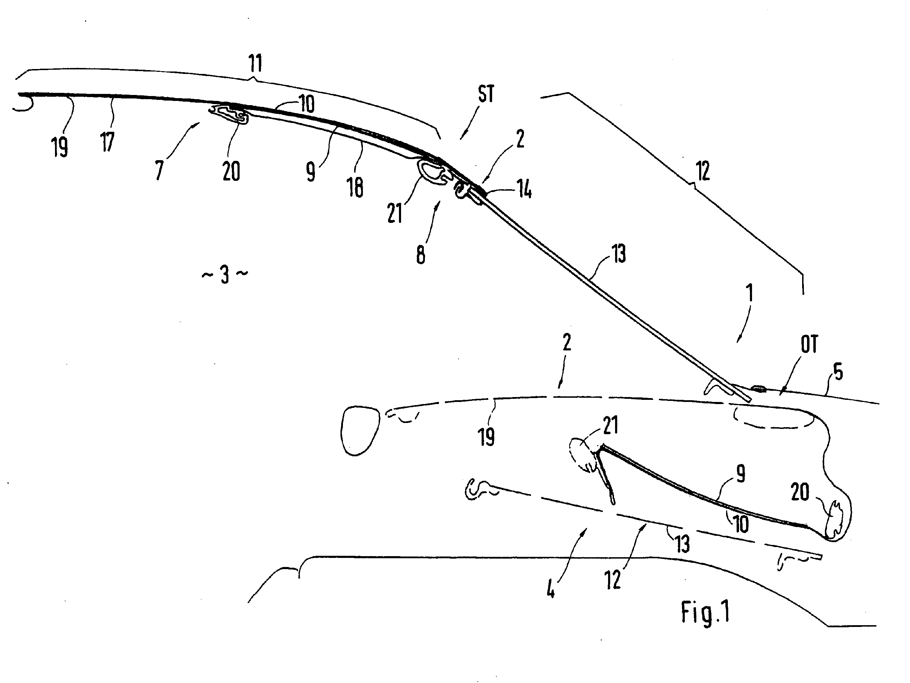

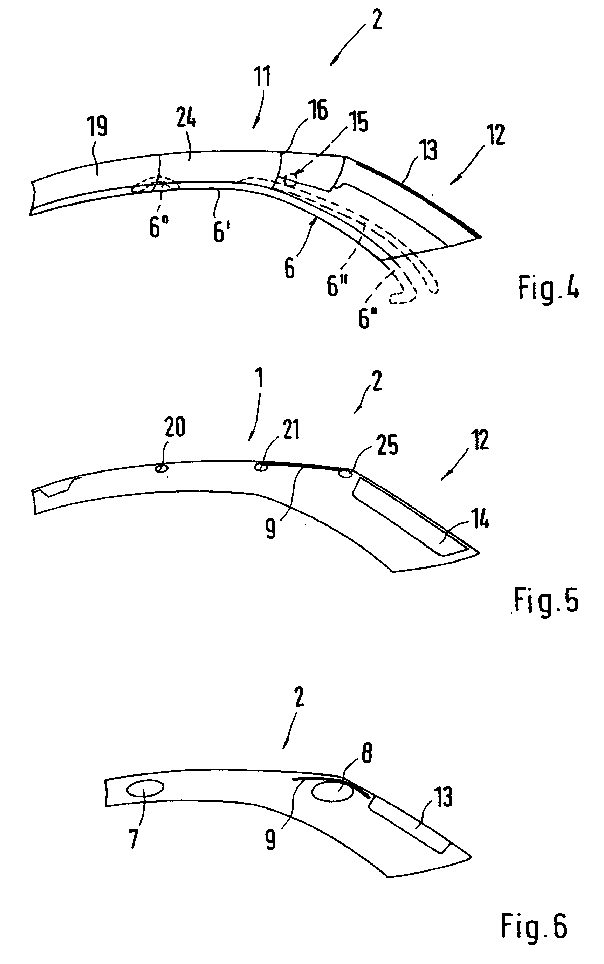

Fig. 1 zeigt einen Längsschnitt durch ein teilweise dargestelltes Kraftfahrzeug 1, welches als Cabriolet mit einer verlagerbaren Dachanordnung 2 ausgestattet ist. Die Dachanordnung 2 ist in Fig. 1 in einer einen Fahrzeuginnenraum 3 überspannenden Schließstellung ST gezeigt und kann in eine zusammengelegte Offenstellung OT in einen heckseitigen Ablagekasten 4 abgelegt werden, welcher nach oben hin zumindest teilweise von einem bewegbaren Kastendeckel 5 abgedeckt wird. Der Kastendeckel 5 ist in Schließstellung gezeigt. Um die Dachanordnung in die Offenstellung OT bewegen zu können, kann der Kastendeckel 5 geöffnet werden, so dass der Ablagekasten 4 nach oben hin offen ist. Für die Bewegung der Dachanordnung 2 von der Schließstellung ST in die Offenstellung OT und umgekehrt weist sie - wie Fig. 4 zeigt - seitliche Steuerlenkergestänge 6 auf, von denen in Fig. 4 lediglich ein Steuerlenkergestänge 6 schematisch und beispielhaft mit seitlichem Dachrahmen 6' und Lenkern 6" gezeigt ist. Zwischen dem dargestellten Steuerlenkergestänge 6 und dem nicht zu sehenden, gegenüberliegenden Steuerlenkergestänge ist zumindest ein kinematisch gesteuertes erstes Querteil 7 eingesetzt, das die beiden Steuerlenkergestänge verbinden kann, wodurch die kinematische Steuerung erreicht werden kann. Ferner ist ein zweites kinematisch gesteuertes Querteil 8 vorgesehen. In Fahrzeuglängsrichtung weisen beide Querteile 7 und 8 einen Abstand zueinander auf. Auf den Querteilen 7,8 liegt in Schließstellung ST der Dachanordnung 2 ein erstes starres Dachsegment 9 auf, welches einen auch als Verdeckstoff bezeichneten Bezug 10 im Bereich eines vorderen Dachabschnitts 11 der Dachanordnung 2 unterstützt. Ein hinterer Dachabschnitt 12 der Dachanordnung 2 weist ein Heckfenster 13 auf. Der Bezug 10 überspannt somit den vorderen Dachabschnitt 11 und den hinteren Dachabschnitt 12, jedoch mit einem Ausschnitt 14 für das Heckfenster 13. Das erste Querteil 7 ist dem vorderen Dachabschnitt 11 und das zweite Querteil 8 ist dem hinteren Dachabschnitt 12 zugeordnet.

Das erste Dachsegment 9 weist für eine Zwangssteuerung bei der Bewegung der Dachanordnung 2 von der Schließstellung ST in die Offenstellung OT und umgekehrt keine kinematische Verbindung zu den bzw. dem Steuerlenkergestänge 6 auf. Lediglich zur Einleitung einer Ablagebewegung beim Beginn des Ablegens von der Schließstellung ST in die Offenstellung OT kann das starre Dachsegment 9 über eine Schwenkachse 15, insbesondere benachbart zu ihrem hinteren oder vorderen Querrand 16, mit zumindest einem der beiden Steuerlenkergestänge 6 (siehe Fig. 4) oder der Heckscheibe 13 oder anderen Teilen des Steuerlenkergestänges verbunden sein.

Um die Offenstellung OT einnehmen zu können, ist das starre Dachsegment 9 mit dem Bezug 10 flächig oder randseitig umlaufend verbunden, wobei hierfür beispielsweise eine an der Innenseite 17 des Bezugs 10 vorgesehene Tasche 18 ausgebildet sein kann, in die das Dachsegment eingesteckt ist. Anstelle dieser Tasche 18 könnten auch längs- bzw. quer- bzw. diagonal verlaufende Bänder oder Schlaufen an der Innenseite 17 des Bezugs 10 angeordnet sein, die das Dachsegment 9 an dem Bezug halten. Alternativ wäre eine Verklebung oder Vernähung des Dachsegments 9 an der Innenseite 17 des Bezugs 10 möglich. Andererseits könnten lösbare Verbindungsmittel, wie beispielsweise ein Klettband oder Druckknöpfe, vorgesehen sein, um das Dachsegment 9 an der Innenseite 17 des Bezugs 10 oder an dessen nicht dargestellten Lagen bzw. Spanngurten sicher zu halten. Ist der Bezug 10 mehrlagig ausgeführt, kann das starre Dachsegment 9 an zumindest einer Lage - wie oben beschrieben - befestigt sein

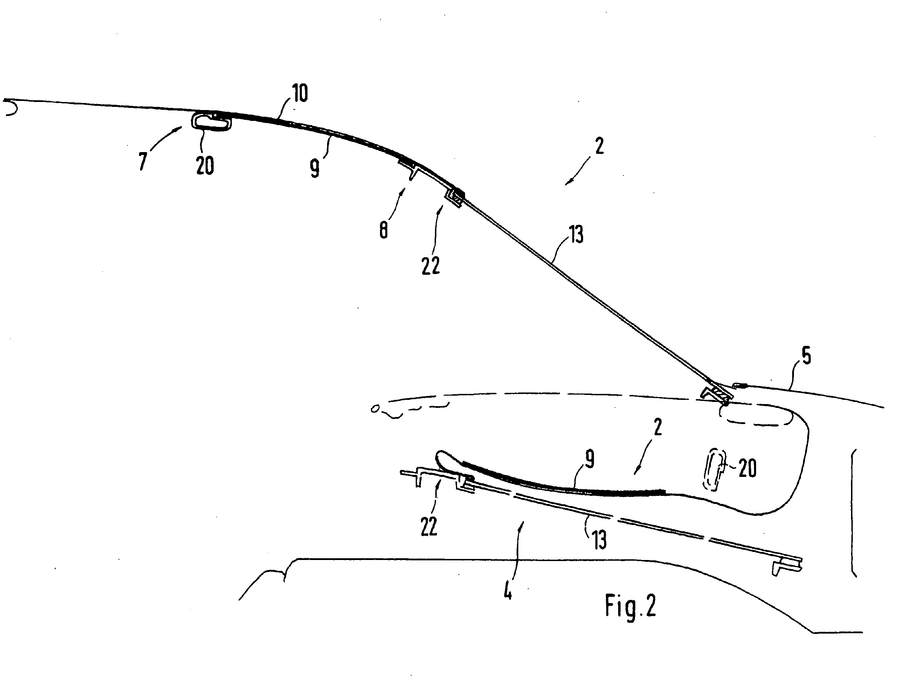

In der gezeigten Schließstellung ST liegt das starre Dachsegment 9 auf dem ersten Querteil 7 und dem zweiten Querteil 8, insbesondere verbindungslos, auf. In Fig. 1 zeigt die Dachanordnung 2 als Ausführungsbeispiel für das erste Querteil 7 ein zweites Dachsegment 19, welches starr ausgebildet sein kann und zur Zwangssteuerung mit den Steuerlenkergestängen 6 kinematisch verbunden ist. Das zweite Dachsegment 19 kann - wie das erste Dachsegment 9 - als durchgehende bzw. vollflächige Dachplatte oder als umlaufender Rahmen ausgeführt sein. Im zweiten in Fig. 2 gezeigten Ausführungsbeispiel ist das vordere, erste Querteil 7 als zwischen den Steuerlenkergestängen 6 verlaufender bügelartiger Dachspriegel 20 ausgeführt, der mit den Steuerlenkergestängen 6 verbunden ist. Das bewegungsgesteuerte zweite Querteil 8 kann ebenfalls als Dachspriegel 21 (Fig. 1) ausgeführt oder - wie Fig. 2 zeigt - von einem Rahmen 22 der Heckscheibe 13 gebildet sein. Die Bewegungssteuerung des zweiten Querteils 8 erfolgt entweder über eine Kopplung mit dem/den Steuerlenkergestänge(n) 6 oder das zweite Querteil 8 weist ggf. zusammen mit dem Heckfenster 13 einen gesteuerten separaten Antrieb auf.

Es wäre somit denkbar, das starre Dachsegment 9 bei einer Dachanordnung 2 gemäß Fig. 4 einzusetzen, bei der der vordere Dachabschnitt 11 ein oder zwei mit den Steuerlenkergestängen 6 verbundene starre Dachsegmente 19 und 24 aufweist, wie sie auch bei einem so genannten Retractable Hardtop (RHT) eingesetzt werden und bis an die seitlichen Dachrahmen 6' heranreichen. Das erste starre Dachsegment 9 allerdings endet seitlich mit Abstand zu den Dachrahmen 6'. Alternativ wäre es gemäß Fig. 5 möglich, das erste starre Dachsegment 9 bei einem so genannten Spriegelverdeck mit einem oder mehreren Dachspriegeln 20, 21, 25 als Querteile einzusetzen. Bei einem derartigen Spriegelverdeck könnte zwischen den Dachspriegeln 20 und 21 bzw. 21 und 24 jeweils zumindest ein starres Dachsegment 9 angeordnet sein.

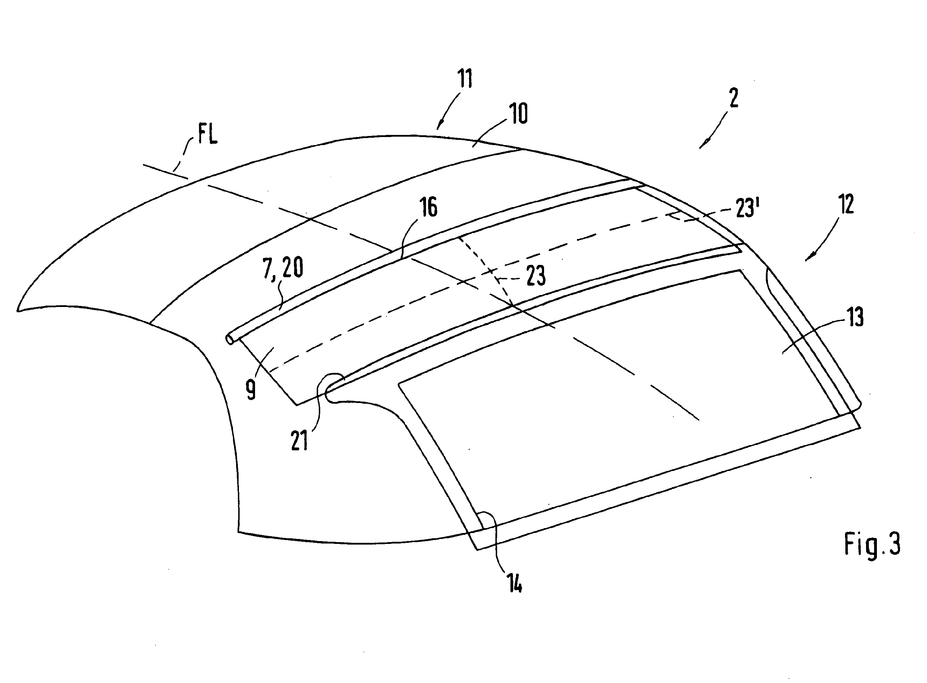

Wie aus Fig. 3 hervorgeht, kann das starre Dachsegment 9 in Fahrzeuglängsrichtung FL, insbesondere mittig, zumindest einmal geteilt sein, was durch eine gestrichelte Linie als Trennstelle 23 angedeutet ist. Insbesondere bei einem bombierten Dachsegment 9 ist dies vorteilhaft, da in Offenstellung OT der Dachanordnung 2 eine weiter verringerte Packhöhe vorliegt. Anstelle der längs verlaufenden Trennstelle 23 könnte alternativ oder zusätzlich eine quer verlaufende Trennstelle 23' in dem Dachsegment 9 vorliegen.

In Offenstellung OT liegt das erste starre Dachsegment 9 zwischen dem hinteren Dachabschnitt 12 und dem vorderen Teil des vorderen Dachabschnitts 11, insbesondere dem zweiten Dachsegment 19. Das Bewegen der Dachanordnung 2 von der Schließstellung ST in die Ablagestellung bzw. Offenstellung OT erfolgt vorzugsweise nach Art der so genannten Z-Faltung, wie es in den Fig. 1 und 2 zu sehen ist.

In einem weiteren, in Fig. 6 gezeigten Ausführungsbeispiel einer Dachanordnung 2 liegt das erste starre Dachsegment 9 lediglich auf einem der Querteile, hier dem Querteil 8, auf. In Schließstellung der Dachanordnung 2 ist das Dachsegment 9 lediglich von dem einen Querteil 8 in Lage gehalten. Ferner kann das Dachsegment 9 - im Querschnitt parallel zur Fahrzeuglängsrichtung FL gesehen - gewölbt ausgeführt sein, was insbesondere dann vorteilhaft ist, wenn das Querteil 8 einen so genannten Eckspriegel bildet.

## Patentansprüche

1. Dachanordnung (2) für ein Cabriolet, die wahlweise in eine einen Fahrzeuginnenraum (3) überspannende Schließstellung (ST) oder in eine zusammengelegte Offenstellung (OT) in einen heckseitigen Ablagekasten (4) bewegbar ist, welche Dachanordnung (2) jeweils seitliche Steuerlenkergestänge (6), zumindest ein gesteuertes erstes Querteil (7) und ein gesteuertes zweites Querteil (8) sowie einen flexiblen Bezug (10) aufweist, welcher Bezug (10) in einem vorderen Dachabschnitt (11) von zumindest einem ersten starren Dachsegment (9) unterstützt wird, **dadurch gekennzeichnet, dass** das starre Dachsegment (9) aus der Steuerung der Steuerlenkergestänge (6) herausgelöst und mit dem Bezug (10) verbunden ist, und dass das starre Dachsegment (9) in Schließstellung (ST) der Dachanordnung (2) auf zumindest einem der Querteile (7, 8) aufliegt.

2. Dachanordnung nach Anspruch 1, **dadurch gekennzeichnet, dass** das erste starre Dachsegment (9) verbindungslos auf dem zumindest einen Querteil (7, 8) aufliegt.

3. Dachanordnung nach Anspruch 1 oder 2, **dadurch gekennzeichnet, dass** das erste starre Dachsegment (9) als vollflächige Dachplatte ausgeführt ist.

4. Dachanordnung nach Anspruch 1 oder 2, **dadurch gekennzeichnet, dass** das erste starre Dachsegment (9) als umlaufender Rahmen ausgeführt ist.

5. Dachanordnung nach Anspruch 1, **dadurch gekennzeichnet, dass** das erste starre Dachsegment (9) mit dem Bezug (10) dadurch verbunden ist, dass es in eine am Bezug ausgebildete Tasche (18) eingesetzt ist.

6. Dachanordnung nach Anspruch 1, **dadurch gekennzeichnet, dass** das erste Dachsegment (9) mit dem Bezug (10) dadurch verbunden ist, dass es mit dem Bezug (10) verklebt oder vernäht ist.

7. Dachanordnung nach Anspruch 1, **dadurch gekennzeichnet, dass** das erste Dachsegment (9) an dem Bezug (10) durch zumindest ein Band oder eine Schlaufe gehalten ist.

8. Dachanordnung nach Anspruch 1, **dadurch gekennzeichnet, dass** das erste starre Dachsegment (9) mit dem Bezug (10) durch zumindest ein lösbares Verbindungsmittel, wie Klettband oder Druckknopf, verbunden ist.

9. Dachanordnung nach Anspruch 1 oder 2, **dadurch gekennzeichnet, dass** das erste Querteil (7) ein vorderes, zweites Dachsegment (19) ist, welches in die Steuerung durch die Steuerlenkergestänge (6) eingebunden und vorzugsweise mit den Steuerlenkergestängen verbunden ist.

10. Dachanordnung nach Anspruch 1 oder 2, **dadurch gekennzeichnet, dass** das erste und zweite Querteil (7, 8) als Dachspriegel (20, 21, 25) ausgeführt sind.

11. Dachanordnung nach Anspruch 1 oder 2, **dadurch gekennzeichnet, dass** lediglich das zweite Querteil (8) ein Dachspriegel (21, 25) ist.

12. Dachanordnung nach Anspruch 1 oder 2, **dadurch gekennzeichnet, dass** das zweite Querteil (8) ein hinterer, ein Heckfenster (13) aufweisender Dachabschnitt (12) der Dachanordnung (2) ist.

13. Dachanordnung nach einem der vorhergehenden Ansprüche, **dadurch gekennzeichnet, dass** das erste Dachsegment (9) längs- oder quergeteilt ist.

14. Dachanordnung nach Anspruch 12, **dadurch gekennzeichnet, dass** der hintere Dachabschnitt (12) direkt oder indirekt in die Steuerung durch die Steuerlenkergestänge (6) eingebunden ist.

15. Dachanordnung nach einem der vorhergehenden Ansprüche, **dadurch gekennzeichnet, dass** das erste starre Dachsegment (9) lediglich an zumindest einem seiner Querränder (16) zum Einleitung eine Ablagebewegung von zumindest einem der Steuerlenkergestänge (6) gesteuert ist.

16. Dachanordnung nach einem der vorhergehenden Ansprüche, **dadurch gekennzeichnet, dass** das erste starre Dachsegment (9) auf beiden Querteilen (7,8) aufliegt.

17. Dachanordnung nach einem der vorhergehenden Ansprüche 1 bis 15, **dadurch gekennzeichnet, dass** das erste starre Dachsegment (9) lediglich auf einem der Querteile (7, 8), vorzugsweise mittig, aufliegt.

18. Dachanordnung nach Anspruch 17, **dadurch gekennzeichnet, dass** das erste starre Dachsegment (9) - in einem Querschnitt parallel zur Fahrzeuglängsachse (FL) gesehen - gewölbt ausgebildet ist.

## Claims

1. Roof arrangement (2) for a cabriolet, the roof arrangement being movable according to choice into a closed position (ST) spanning a vehicle interior (3) or into a rear storage compartment (4) into a folded-up open position (OT), which roof arrangement (2) in each case has lateral control rod assemblies (6), at least one controlled first transverse part (7) and one controlled second transverse part (8), and a flexible cover (10), which cover (10) is supported in a front roof section (11) by at least one first rigid roof segment (9), **characterized in that** the rigid roof segment (9) is released from the control system of the control rod assemblies (6) and is connected to the cover (10), and **in that** the rigid roof segment (9) rests on at least one of the transverse parts (7, 8) in the closed position (ST) of the roof arrangement (2).

2. Roof arrangement according to Claim 1, **characterized in that** the first rigid roof segment (9) rests on the at least one transverse part (7, 8) without any connections.

3. Roof arrangement according to Claim 1 or 2, **characterized in that** the first rigid roof segment (9) is designed as a solid roof panel.

4. Roof arrangement according to Claim 1 or 2, **characterized in that** the first rigid roof segment (9) is designed as an encircling frame.

5. Roof arrangement according to Claim 1, **characterized in that** the first rigid roof segment (9) is connected to the cover (10) by being inserted into a pocket (18) formed on the cover.

6. Roof arrangement according to Claim 1, **characterized in that** the first roof segment (9) is connected to the cover (10) by being adhesively bonded or stitched to the cover (10).

7. Roof arrangement according to Claim 1, **characterized in that** the first roof segment (9) is held on the cover (10) by at least one strap or a loop.

8. Roof arrangement according to Claim 1, **characterized in that** the first rigid roof segment (9) is connected to the cover (10) by at least one releasable connecting means, such as a touch-and-close tape or press stud.

9. Roof arrangement according to Claim 1 or 2, **characterized in that** the first transverse part (7) is a front second roof segment (19) which is linked into the control system by the control rod assemblies (6) and is preferably connected to the control rod assemblies.

10. Roof arrangement according to Claim 1 or 2, **characterized in that** the first and second transverse parts (7, 8) are designed as roof bows (20, 21, 25).

11. Roof arrangement according to Claim 1 or 2, **characterized in that** only the second transverse part (8) is a roof bow (21, 25).

12. Roof arrangement according to Claim 1 or 2, **characterized in that** the second transverse part (8) is a rear roof section (12) of the roof arrangement (2), said roof section having a rear window (13).

13. Roof arrangement according to one of the preceding claims, **characterized in that** the first roof segment (9) is divided longitudinally or transversely.

14. Roof arrangement according to Claim 12, **characterized in that** the rear roof section (12) is linked directly or indirectly into the control system by the control rod assemblies (6).

15. Roof arrangement according to one of the preceding claims, **characterized in that** the first rigid roof segment (9) is controlled only at at least one of the transverse edges (16) thereof in order to initiate a putting-away movement by at least one of the control rod assemblies (6).

16. Roof arrangement according to one of the preceding claims, **characterized in that** the first rigid roof segment (9) rests on both transverse parts (7, 8).

17. Roof arrangement according to one of the preceding claims 1 to 15, **characterized in that** the first rigid roof segment (9) rests, preferably centrally, only on one of the transverse parts (7, 8).

18. Roof arrangement according to Claim 17, **characterized in that** the first rigid roof segment (9) is of curved design - as seen in a cross section parallel to the vehicle longitudinal axis (FL).

## Revendications

1. Agencement de toit (2) pour un cabriolet, qui est déplaçable au choix dans une position de fermeture (ST) recouvrant un espace intérieur du véhicule (3) ou dans une position d'ouverture (OT) repliée dans un coffre de rangement (4) côté arrière, agencement de toit (2) qui présente respectivement des tringles articulées de commande latérales (6), au moins une première pièce transversale commandée (7) et une deuxième pièce transversale commandée (8), ainsi qu'une couverture flexible (10), cette couverture (10) étant soutenue dans une partie avant du toit (11) par au moins un premier segment de toit rigide (9), **caractérisé en ce que** le segment de toit rigide (9) est détaché de la commande des tringles articulées de commande (6) et est assemblé à la couverture (10), et **en ce que** le segment de toit rigide (9) repose sur au moins une des pièces transversales (7, 8) dans la position de fermeture (ST) de l'agencement de toit (2).

2. Agencement de toit selon la revendication 1, **caractérisé en ce que** le premier segment de toit rigide (9) repose sans liaison sur ladite au moins une pièce transversale (7, 8).

3. Agencement de toit selon la revendication 1 ou 2, **caractérisé en ce que** le premier segment de toit rigide (9) est constitué par une plaque de toit pleine.

4. Agencement de toit selon la revendication 1 ou 2, **caractérisé en ce que** le premier segment de toit rigide (9) est constitué par un cadre périphérique.

5. Agencement de toit selon la revendication 1, **caractérisé en ce que** le premier segment de toit rigide (9) est assemblé à la couverture (10) par le fait qu'il est introduit dans une poche (18) formée sur la couverture.

6. Agencement de toit selon la revendication 1, **caractérisé en ce que** le premier segment de toit (9) est assemblé à la couverture (10) par le fait qu'il est collé ou cousu à la couverture (10).

7. Agencement de toit selon la revendication 1, **caractérisé en ce que** le premier segment de toit (9) est retenu sur la couverture (10) par au moins une attache ou une boucle.

8. Agencement de toit selon la revendication 1, **caractérisé en ce que** le premier segment de toit rigide (9) est assemblé à la couverture (10) par au moins un moyen de liaison séparable, comme une bande Velcro ou un bouton à pression.

9. Agencement de toit selon la revendication 1 ou 2, **caractérisé en ce que** la première pièce transversale (7) est un deuxième segment de toit avant (19), qui est intégré dans la commande par les tringles articulées de commande (6) et qui est de préférence relié aux tringles articulées de commande.

10. Agencement de toit selon la revendication 1 ou 2, **caractérisé en ce que** la première et la deuxième pièces transversales (7, 8) sont constituées par des arceaux de toit (20, 21, 25).

11. Agencement de toit selon la revendication 1 ou 2, **caractérisé en ce que** seule la deuxième pièce transversale (8) est un arceau de toit (21, 25).

12. Agencement de toit selon la revendication 1 ou 2, **caractérisé en ce que** la deuxième pièce transversale (8) est une partie de toit arrière (12) de l'agencement de toit (2), présentant une lunette arrière (13).

13. Agencement de toit selon l'une quelconque des revendications précédentes, **caractérisé en ce que** le premier segment de toit (9) est divisé en direction longitudinale ou transversale.

14. Agencement de toit selon la revendication 12, **caractérisé en ce que** la partie de toit arrière (12) est intégrée directement ou indirectement dans la commande par les tringles articulées de commande (6).

15. Agencement de toit selon l'une quelconque des revendications précédentes, **caractérisé en ce que** le premier segment de toit rigide (9) est commandé uniquement à au moins un de ses bords transversaux (16) par au moins une des tringles articulées de commande (6) pour induire un mouvement de rangement.

16. Agencement de toit selon l'une quelconque des revendications précédentes, **caractérisé en ce que** le premier segment de toit rigide (9) repose sur les deux pièces transversales (7, 8).

17. Agencement de toit selon l'une quelconque des revendications 1 à 15, **caractérisé en ce que** le premier segment de toit rigide (9) repose uniquement sur une des pièces transversales (7, 8), de préférence au milieu.

18. Agencement de toit selon la revendication 17, **caractérisé en ce que** le premier segment de toit rigide (9) est de forme courbe - considéré dans une section transversale parallèle à l'axe longitudinal du véhicule (FL).
